(19) **Europäisches Patentamt / European Patent Office / Office européen des brevets**

(11) **EP 4 738 732 A1**

(12) **EUROPEAN PATENT APPLICATION**

(43) Date of publication:
06.05.2026 Bulletin 2026/19

(21) Application number: 25201385.9

(22) Date of filing: 10.09.2025

(51) International Patent Classification (IPC):
H04B 17/20 (2015.01)   H04B 17/345 (2015.01)
H04B 17/391 (2015.01)

(52) Cooperative Patent Classification (CPC):
H04B 17/345; H04B 17/252; H04B 17/253;
H04B 17/391

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.10.2024 US 202418930976

(71) Applicant: The Boeing Company
Arlington, VA 22202 (US)

(72) Inventors:
• THOMAS, Nathaniel T.
Arlington, 22202 (US)
• HARRIS, William Matthew
Arlington, 22202 (US)

(74) Representative: St Clair Jones, Gregory Arthur
Langley et al
Kilburn & Strode LLP
Lacon London
84 Theobalds Road
London WC1X 8NL (GB)

(54) **METHOD AND SYSTEM FOR A CONSTRAINT-BASED APPROACH TO LOCATE RADIO FREQUENCY INTERFERENCE DEVICES AND IDENTIFY IMPACTED AREAS**

(57) The present disclosure provides techniques for localizing RF interference devices and identifying impacted RF receiver paths or positions. A plurality of RF interference events are collected from one or more data sources. A group of RF interference events that indicate interference from a common RF interference source are identified from the plurality of RF interference events. An RF receiver location is estimated from each RF interference event. A plurality of RF interference source location constraint regions are created, each region being a volume referenced to an estimated RF receiver location. An overlapping volume that the plurality of RF interference source location constraint regions intersect is identified. An RF interference influence volume is defined by expanding the overlapping volume based on an interference range of the RF interference device as a function of direction.

FIG. 3

## Description

FIELD

Aspects of the present disclosure relate to radio frequency interference detection. More specifically, aspects of the present disclosure relate to a constraint-based approach for locating radio frequency interference (RFI) sources and identifying impacted areas.

BACKGROUND

Conventionally, airplanes broadcast data and event logs that include indications of systems or functions that are not operating as expected, such as invalid or erroneous data from a system that receives radio frequencies (RF) to function, which may be due to an external RF interference (RFI) source. Review of these data and events in real time or after the fact can be combined with time and location of the airplane and assumptions about any possible external causes to constrain the possible location of the source and estimate the area of impact of the RFI source. One example of an RFI source is a Global Positioning System (GPS) spoofer, which intentionally transmits false GPS signals that cause GPS receivers to output invalid or erroneous data. A GPS spoofer or any RFI transmitter could impact many aircraft RF receivers as distant as anywhere within radio line of sight of the RFI transmitter.

SUMMARY

The present disclosure provides a method in one aspect, the method including collecting a plurality of radio frequency (RF) interference events from one or more data sources, identifying a group of RF interference events, from the plurality of RF interference events, that indicate interference from a common RF interference device, estimating a respective RF receiver location from each respective RF interference event, of the group of RF interference events, creating a plurality of RF interference source location constraint regions, each respective region being a volume referenced to a respective RF receiver location, identifying an overlapping volume that the plurality of RF interference source location constraint regions intersect, and defining an RF interference influence volume by expanding the overlapping volume based on an interference range of the RF interference device as a function of direction.

Other aspects of this disclosure provide one or more (optionally non-transitory) computer-readable media containing, in any combination, computer program code that, when executed by the operation of a computer system, performs an operation in accordance with one or more of the above methods, as well as systems comprising one or more memories containing one or more programs and one or more computer processors that are configured to, individually or collectively, perform an operation in accordance with one or more of the above methods.

BRIEF DESCRIPTION OF THE DRAWINGS

So that the manner in which the above recited features can be understood in detail, a more particular description, briefly summarized above, may be had by reference to example aspects, some of which are illustrated in the appended drawings.

Figure 1 depicts an example process for an airplane detecting a RF interference event and sending a custom GPS event monitor report, according to some aspects of the present disclosure.

Figures 2A-2C depict example custom GPS event monitor reports with the same spoofed GPS location, as well as several overlapping interference source location constraint regions, according to some aspects of the present disclosure.

Figure 3 depicts an example minimum overlapping area with interference influence area determined, according to some aspects of the present disclosure.

Figure 4 depicts an example flow for detecting and localizing RFI sources and identifying impacted flight paths, according to some aspects of the present disclosure.

Figure 5 depicts an example method for interference detection and impact analysis using custom GPS event monitor reports, according to some aspects of the present disclosure.

Figure 6 depicts an example method for interference detection and impact analysis using coasted ADS-B data, according to some aspects of the present disclosure.

Figure 7 is a flow diagram depicting an example method for RF interference detection, according to some aspects of the present disclosure.

Figure 8 depicts an example computing device configured to perform various aspects of the present disclosure, according to some aspects of the present disclosure.

DETAILED DESCRIPTION

An airplane generates a custom RF receiver event monitor report (e.g., a report indicating occurrence of a GPS RFI event, hereinafter an "event monitor report") when a RF interference event is detected. This event typically occurs when data from an RF receiver is invalid or erroneous, for example when a GPS-reported location has discontinuity or does not match other on-board position sources, such as an inertial navigation system. While individual event monitor reports provide valuable information for detecting RF interference or spoofing, these reports are limited in scope, offering only isolated samples of RF interference events without a broader context. This limitation makes it difficult to accurately assess the full extent of RF spoofing, particularly when the RFI occurs intermittently or across a wide area.

To address these and other issues, the present disclosure introduces techniques for detecting patterns in RF interference events by analyzing large datasets, including the event monitor reports and/or other sources such as ADS-B data collected over time. By identifying these patterns, the disclosed approach enables the accurate identification and localization of RF spoofing devices and estimates the full scope of the affected areas.

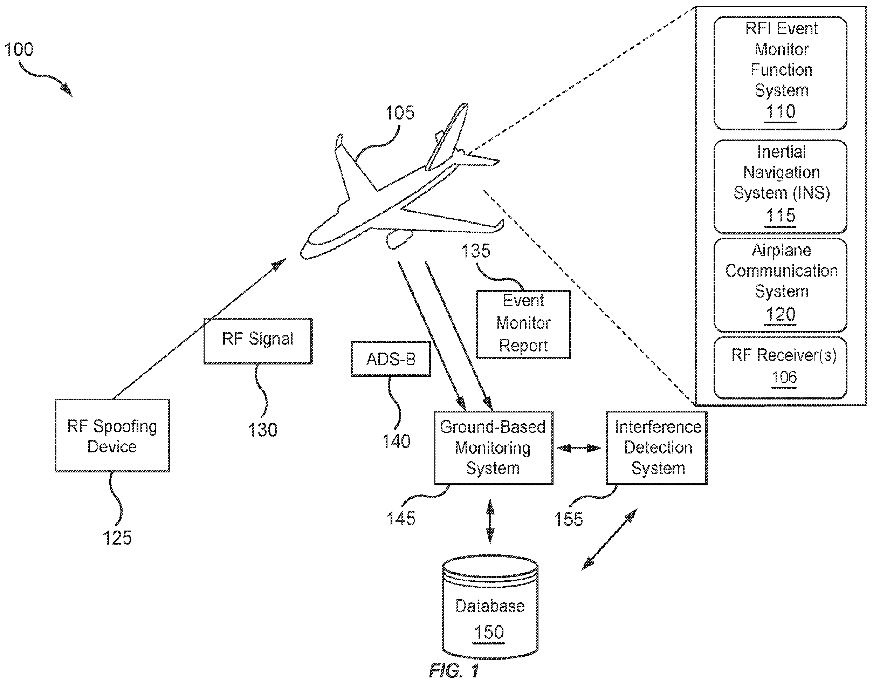

Figure 1 depicts an example process 100 for an airplane 105 detecting a RF interference event and sending a custom GPS event monitor report 135, according to some aspects of the present disclosure.

As illustrated, a device 125 (e.g., located on the ground) sends a spoofed RF signal 130 to the airplane 105 in flight. The signal 130 may mislead the airplane 105 RF receiver system 106 by providing false RF signals.

As depicted, the airplane 105 comprises an event monitor function system 110, one or more RF receiver(s) 106, an inertial navigation system (INS) 115, and an airplane communication system 120. The event monitor function system 110 is configured to monitor RF receiver 106 outputs and detect events, which occur when there is a discrepancy between the RF receiver 106 outputs and the expected outputs (e.g., a GPS receiver reporting an invalid or erroneous navigation data compared with the INS 115 outputs). The INS 115 is configured to calculate the airplane's location independently of the GPS by using internal sensors, such as accelerometers and gyroscopes. These sensors measure the airplane's acceleration and rotational movements, allowing the INS 115 to update the aircraft's position, velocity, and orientation without relying on external RF signals (e.g., GPS signals).

When the RF spoofing device 125 transmits the spoofed RF signal 130 within range of the airplane 105, the RF receiver(s) 106 may process the spoofed RF signal 130 resulting in invalid or erroneous outputs, such as erroneous position. Previously, simultaneously, or sequentially, the event monitor function system 110 retrieves (or receives) data from other systems, such as the INS 115. Since the INS 115 operates independently of external RF signals, the inertial navigation data may provide a reliable representation of the airplane's 105 true location and motion.

The aircraft event monitor function 110 then compares the RF receiver data with expected behavior or other data (e.g., GPS receiver output data compared with data output by the inertial navigation data) (also referred to in some aspects as inertial navigation location). If the RF data is not valid, or if there is a significant discrepancy between dissimilar sources of data (e.g., greater than a threshold), indicating potential RF interference or spoofing, the event monitor function 110 produces an event monitor report 135. In some aspects, a threshold may be defined to measure the discrepancy, and when the discrepancy exceeds the threshold, it may be considered significant to generate an event monitor report.

In response to each event monitor report 135, the airplane communication system 120 may be automatically enabled to transmit the event monitor report 135 to the ground-based monitoring system 145 for further analysis.

In some aspects, the event monitor reports 135 may include detailed information, such as the spoofed RF data, the INS location, and additional diagnostic information (e.g., timestamps, sensor readings) that may help identify and analyze the RFI event. As illustrated, the ground-based monitoring system 145 is coupled to a database 150 and an interference detection system 155. The ground-based monitoring system 145 stores the received event monitor reports 135 in the database 150, and the interference detection system 155 retrieves these reports 135 from the database 150 to perform further analysis.

In some aspects, the interference detection system 155 may utilize a clustering algorithm (e.g., k-means) to process the event monitor reports 135 received over an extended period of time. The clustering algorithm may group these reports 135 into clusters that share the same (or similar) RFI characteristics (e.g. similar erroneous data, such as false GPS positions). In some aspects, additional common characteristics of multiple event monitor reports 135, including effects on any RF system on the airplane, may be clustered based on various information to create groups.

In some aspects, the categorization may be performed manually. Analysts may review the event monitor reports and identify patterns based on common RFI characteristics (e.g., spoofed GPS locations or slight deviations from a central location). A threshold may be setup for grouping reports with nearly identical spoofed GPS locations. Additionally, the analysts may use various visual mapping tools to assist in identifying clusters of spoofed data. Although more time-consuming, manual categorization may allow for more flexibility and expert judgment in handling edge cases or unusual patterns.

After categorization, the interference detection system 155 may analyze each group of event monitor reports 135 in the database 150 with the same (or similar) RFI characteristics. The interference detection system 155 may estimate the true location of the airplane 105 and GPS receiver 106 (e.g., based on data from the INS 115 in each event report 135 within the group). The interference detection system 155 may estimate the interference source location constraint region for each event report 135 in the database 150 based on the airplane location and height and based on assumptions about the RF spoofing device 125, such as power level, antenna patterns, location (e.g. RF spoofer assumed to be on the surface of Earth with very high power, omnidirectional antenna pattern). As used herein, the minimum overlapping area may refer to the region where these constraint regions corresponding to a given cluster intersect. The interference detection system 155 may then adjust the minimum overlapping area using the estimated interference range of the spoofing device 125 (e.g., 315 miles) to determine the area that the spoofing device 125 may potentially influence. In some aspects, following the determination of the spoofing influence area, the interference detection system 155 may search through this area on a geographic map to further identify the exact location of the spoofing device. In some aspects, the interference detection system 155 may compare the influence area with known flight paths (or waypoints) to determine which flight paths (or waypoints) may be impacted by the spoofing device 125.

As illustrated, the airplane 105 in flight also broadcasts ADS-B data 140 to the ground-based monitoring system 145. The data typically includes information sourced from RF receivers (e.g. GPS position reports, which may be impacted by spoofed RF signals). In some aspects, the ADS-B data 140 may then be saved in the database 150. When RF signals are suspected to be compromised, analysts, either manually or via an automated process, may review the ADS-B trajectories of various flights and remove all data points determined to be spoofed. Once the spoofed points are removed from the trajectories, the remaining data may be used to generate coasted ADS-B data, which estimates the true airplane position independent of the spoofed data. The coasted ADS-B data 140 may also be saved in the database 150.

In some aspects, such as when the event monitor reports 135 are not available, the interference detection system 155 may identify the spoofing influence area using the coasted ADS-B data. For example, in some aspects, the interference detection system 155 may retrieve coasted ADS-B data that indicate similar RF interference events toward a common false location. The coasted ADS-B data may provide a reliable estimate of an airplane's true location. The interference detection system 155 may determine RF spoofing device location constraint regions around these locations derived from the coasted ADS-B data, and identify the minimum overlapping area without inertial data. Considering the minimum overlapping area and the estimated interference range of the spoofing device 125 (e.g., within radio line of sight on the surface of Earth), the interference detection system 155 may determine the influence area.

In some aspects, the ground-based monitoring system 145 and the interference detection system 155 may be operated by a single computer device or by separate computer devices that are either locally or remotely connected (e.g., via the Internet). In some aspects, the database 150 that stores the event monitor reports 135 and coasted ADS-B data 140 may reside either in local storage or as part of a cloud-based database, depending on the system's configuration and needs.

The depicted method, where the interference detection system 155 processes event monitor reports or coasted ADS-B data to identify the influence area of signals sent by a spoofing device 125, is provided for conceptual clarity. In some aspects, the disclosed method may also be applicable to other types of radio frequency (RF) interference activities. These interference activities may produce common interference symptoms across a group of flights that are affected by the same interference source. These common interference symptoms may include, but are not limited to, position shifts, altitude shifts, time shifts, position accuracy estimates, and a loss of contact with GPS satellite sources. The interference detection system 155 may similarly process data in these scenarios to determine the true location of the airplane and estimate the area affected by RF interference.

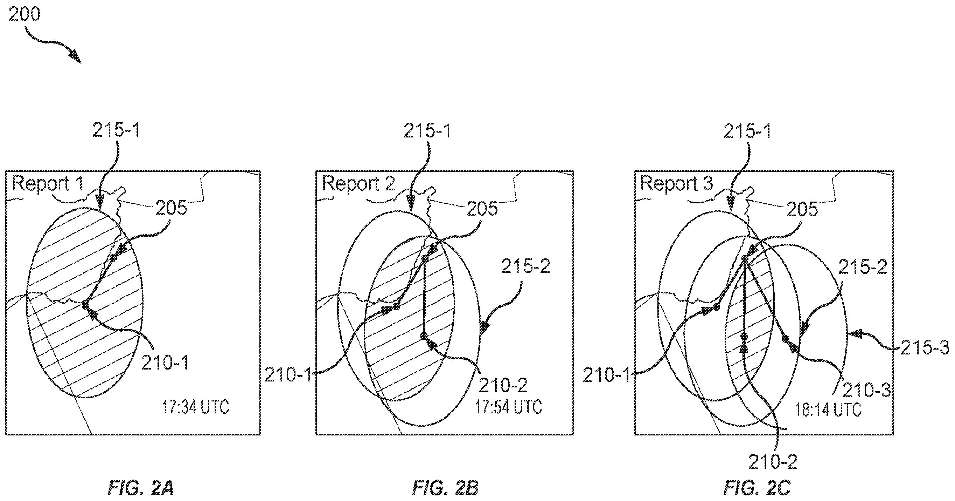

Figures 2A-2C depict example custom GPS event monitor reports with the same spoofed GPS location, as well as several overlapping interference source location constraint regions, according to some aspects of the present disclosure.

Figure 2A shows an event monitor report (e.g., Report 1) generated at 17:34 UTC. The report includes a spoofed GPS location indicated by the point 205 (e.g., determined based on the spoofed GPS signal) and an INS location indicated by the point 210-1 (e.g., determined based on inertial navigation data). Both locations are presented as two-dimensional (2D) data, such as using latitude and longitude coordinates. When mapping onto a global geographic map, the location of the point 205 represents the spoofed GPS location, and the location of the point 210-1 represents the INS location of the airplane (at the indicated timestamp). As illustrated, a constraint region 215-1 is generated around the point 210-1, based on assumptions about the RF spoofing device (e.g., 125 of Figure 1) (e.g., radio line of sight on the Earth surface). In some aspects, additional constraints on the RF spoofing device location can be included based on hypotheses about the RF spoofing device characteristics (e.g., three-dimensional volumes based on varying range of influence, known RF receiver antenna patterns, terrain considerations, or non-stationary source location hypotheses).

Figure 2B shows an event monitor report (e.g., Report 2) generated at 17:54 UTC. The report includes a spoofed GPS location (indicated by the point 205), which is the same as the location indicated in Report 1, and an INS location (indicated by the point 210-2) that is different from the INS location indicated in Report 1. Both locations are represented as 2D data, including latitude and longitude coordinates. As depicted, the point 205 on the global geographic map represents the spoofed GPS location indicated by Report 1 and Report 2, and while the point 210-2 represents the INS location indicated in Report 2. As depicted, a constraint region 215-2 is generated around Point 210-2, based on assumptions about the RF spoofing device (e.g., 125 of Figure 1) (e.g., radio line of sight on the Earth surface). An overlapping area is depicted between the constraint region 215-1 and 215-2. The overlapping area indicates the potential location of the spoofing device. In some aspects, additional constraints on the RF spoofing device location can be included based on hypotheses about the RF spoofing device characteristics (e.g., three-dimensional volumes based on varying range of influence, known RF receiver antenna patterns, terrain considerations, or non-stationary source location hypotheses).

Figure 2C shows an event monitor report (e.g., Report 3) generated at 18:14 UTC. This report includes the same spoofed GPS location as indicated in Report 1 and Report 2 (indicated by the point 205), but with a different INS location (indicated by the point 210-3). Both the spoofed GPS location and the INS location are represented as 2D data, including latitude and longitude coordinates. When mapped onto a global map, the point 205 represents the spoofed GPS location as discussed above, and the point 210-3 represents the INS location indicated in Report 3. As depicted, a constraint region 215-3 is generated around Point 210-3, based on assumptions about the RF spoofing device (e.g., 125 of Figure 1) (e.g., radio line of sight on the Earth surface). As shown, the overlapping area is formed by region 215-1 (from Report 1), region 215-2 (from Report 2), and region 215-3 (from Report 3), which further narrow down the potential location of the spoofing device. In some aspects, additional constraints on the RF spoofing device location can be included based on hypotheses about the RF spoofing device characteristics (e.g., three-dimensional volumes based on varying range of influence, known RF receiver antenna patterns, terrain considerations, or non-stationary source location hypotheses).

The reports illustrated in Figures 2A-2C are provided for conceptual clarity. In some aspects, any number of event monitor reports may be analyzed. The more event monitor reports available, the more constraint regions can be generated around the respective event airplane locations. As additional reports are processed, the overlapping area among these constraint regions may be further reduced, increasing the precision in identifying the potential location of the RF spoofing device.

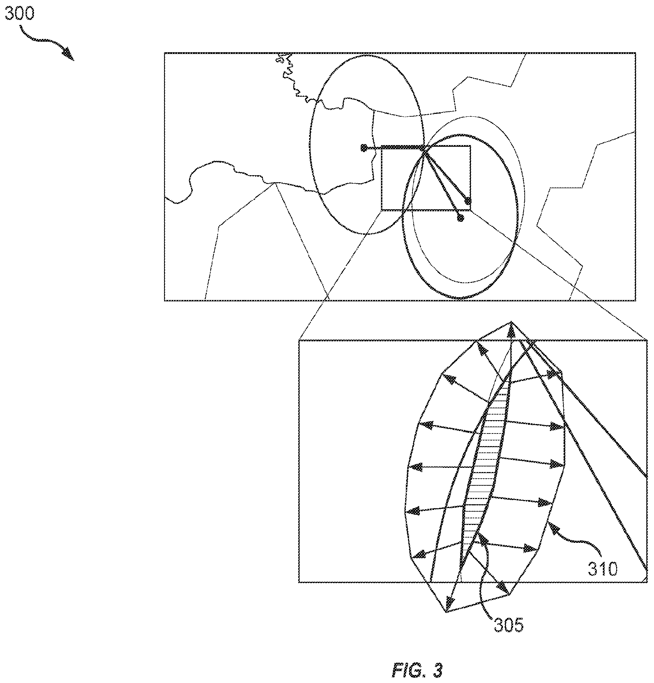

Figure 3 depicts an example minimum overlapping area 305 with interference influence area 310 determined, according to some aspects of the present disclosure.

As depicted, the minimum overlapping area 305 is formed by three constraint regions, each generated around three INS locations from a larger set of data such that no other constraint region from an event report 135 will reduce the area. The minimum overlapping area 305, where three ellipses intersect, represents the most likely location of the RF spoofing device (e.g., 125 of Figure 1) or other RFI sources causing the common effect for the group of reports 135 (e.g., in the database 150).

As depicted, the minimum overlapping area 305 can be expanded uniformly in all directions by the estimated interference range of a spoofing device (e.g., 315 miles) or other RFI sources. The resulting expanded area represents the interference influence area 310. Any flight paths or waypoints that intersect with this area 310 may be affected by the interference.

In some aspects, the estimated inference range of an RFI source with high power at a frequency that is line of sight limited may be calculated as follows, with the assumption that the RFI source and RF receiver heights are known or assumed:

$$R_{RFI@h_{Rx}} = \sqrt{2 \times \frac{4}{3} R_e h_{RFI} + h_{Rx}} + \sqrt{2 \times \frac{4}{3} R_e h_{Rx} + h_{RFI}},$$

where $R_{RFI@h_{Rx}}$ represents the estimated radio frequency interference (RFI) range, $R_e$ represents the radius of the Earth, $h_{Rx}$ represents the height of the RF receiving antenna, and $h_{RFI}$ represents the height of the RFI source.

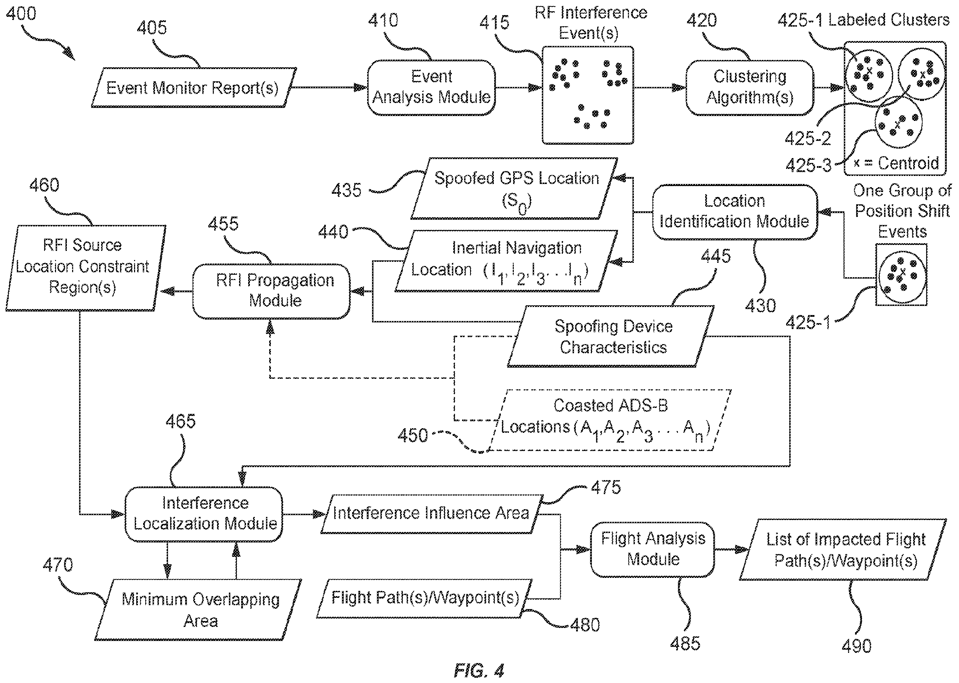

Figure 4 depicts an example process flow 400 for detecting and localizing RF sources (e.g., a GPS spoofing device) and identifying impacted flight paths, according to some aspects of the present disclosure.

The process 400 begins with event monitor reports 405 being input into the event analysis module 410. In some aspects, the event monitor reports may correspond to the report 135 received by the ground-based monitoring system 145 as depicted in Figure 1. In some aspects, the event analysis module 410 may process event monitor reports received over an extended period of time as part of the interference detection system 155 as depicted in Figure 1. These reports may indicate RF interference events across various geographic areas.

As depicted, the event analysis module 410 processes the event monitor reports 405 and identifies RF interference events 415 based on discrepancies between GPS-reported locations and inertial navigation locations (also referred to in some aspects as INS locations). In some aspects, the event monitor report 405 may indicate directly if the event report was triggered by a position shift for the event analysis module 410 to more easily identify RF interference events and avoid duplication of functionality. In some aspects the event analysis module 410 may identify other types of RF interference events with common effects.

In some aspects, the identified events 415 (as depicted, RF interference events) may potentially occur for different airplanes and at different time, reflecting a wide range of scenarios where GPS spoofing might affect various flights over extended periods. As depicted, these events 415 are then fed into a clustering algorithm 420, which groups the events 415 into labeled clusters based on similarities in RF interference effects (as depicted, erroneous RF receiver data with similar erroneous positions). For example, group 425-1 of RF interference events is identified as a first cluster with the same (or similar) spoofed GPS location. Group 425-2 of RF interference events is identified as a second cluster with the same (or similar) spoofed GPS location. Group 425-3 of RF interference events is identified as a third cluster with the same (or similar) spoofed GPS location. Examples of clustering algorithms 420 used for unsupervised learning in this context may include k-means, density-based spatial clustering of applications with noise (DBSCAN), or hierarchical clustering, among others. These algorithms analyze the diverse set of RF interference events 415 to generate labeled clusters, and facilitate the identification of potential GPS spoofing activities. In some aspects, manual categorization may be used. Analysts may review the RF interference events and group them based on common spoofed GPS locations or slight variations around a central location. In some aspects, various other common interference effects may be used for clustering.

The process 400 continues with the location identification module 430, which analyzes each group of RF interference events. As depicted, for group 425-1, the location identification module 430 identifies the common spoofed GPS location ($S_0$) 435 (e.g., 205 of Figure 2C) and corresponding inertial navigation locations ($I_1, I_2 \ldots I_n$) 440 (e.g., 210-1, 210-2, and 210-3 of Figure 2C) for each RF interference event. As depicted, using this information, the RFI propagation module 455 generates RFI source location constraint regions (e.g., 215-1, 215-2, or 215-3 of Figure 2C) around each of the inertial navigation locations ($I_1, I_2 \ldots I_n$) 440, based on the characteristics determined by the spoofing device characteristics 445 (e.g., the radius of circles with the radio line of sight range).

In some aspects, the spoofing device characteristics may refer to the maximum range within which the spoofing device can effectively influence GPS signals (e.g., radio line of sight). The radius may be determined based on the configurations or settings of the spoofing device, such as its maximum interference range, power output, and environmental factors that may affect signal prorogation. In some aspects, if the particular configurations or capabilities of the spoofing device are unknown, the RFI propagation module 455 may estimate or infer the range (e.g., based on historical information, known device types, and the like). A circle may be generated when the spoofing device's influence is assumed to be uniform in all directions. A three-dimensional volume may be used when antenna patterns, power levels, terrain, or other aspects are known or hypothesized.

In some aspects, in addition to or instead of event monitor reports 405, coasted ADS-B data 450 may be used for identification and localization of GPS spoofing events. The coasted ADS-B data may provide a reliable estimate of the airplane's true location independent of the compromised GPS signals. Coasted ADS-B data indicating spoofing to the same (or similar) GPS location may be identified manually or automatically by using clustering algorithms to group similar events. Once identified, the coasted ADS-B locations ($A_1, A_2 \ldots A_n$) 450 may then be provided to the RFI propagation module 455, which generates RFI source location constraint regions 460 around these estimated locations. Similar to the process with event monitor reports 405, the constraint region(s) 460 are based on the assumed or known spoofing device characteristics 445.

These source location constraint regions 460 (e.g., 215-1, 215-2, and 215-3 of Figure 2) are then processed by the interference localization module 465 to identify the minimum overlapping area (or volume) 470 (e.g., 305 of Figure 3). As used herein, the minimum overlapping area 470 refers to the region where all these constraint regions 460 intersect, which may represent the most likely location of the spoofing device. The minimum overlapping area may be shown as an irregular shape (e.g., 305 of Figure 3). Based on the minimum overlapping area 470, in some aspects, the interference localization module 465 may expand the minimum overlapping area (or volume) 470 in all directions using the spoofing device characteristics 445 (e.g., radio line of sight). The resulting expanded area represents the (potential) interference influence area (or volume) 475 (e.g., 315 of Figure 3). The influence area accounts for the full potential reach of the spoofing device.

The identified interference influence area (or volume) 475 is then compared against known flight paths (or waypoints) 480 using the flight analysis module 485. If any flight paths (or waypoints) intersect with the identified interference influence area 475, the flight analysis module 485 flags these flight paths (or waypoints) as potentially impacted by the spoofing device, and adds them into a list 490. In some aspects, the list of impacted flight paths (or waypoints) 490 may then be provided to relevant parties, such as airline companies, air traffic control, or aviation safety authorities, to perform further analysis and take mitigation measures to ensure aviation safety. The mitigation measures may include, but are not limited to, rerouting flights, issuing warnings to pilots, or implementing countermeasures to protect against potential GPS spoofing events.

In some aspects, the inertial navigation data used in this analysis may be 2D data, including longitude and latitude coordinates. In this configuration, 2D geometric shapes like circles or ellipses are generated on maps using the inertial navigation location 440 as the center, with the simplified, altitude independent spoofing device characteristics 445 (e.g., assume maximum airplane altitude for line of sight calculations).

In some aspects, the inertial navigation data may be 3D data, including longitude, latitude, and altitude coordinates. When working with 3D data, the spoofing device characteristics 445 may result in arbitrary 3D geometric shapes centered around the inertial navigation location 440. The spoofing localization module may then compare these 3D geometric shapes to identify the 3D overlapping area 470.

Once the 3D overlapping area 470 is identified, the interference localization module 465 may determine the 3D influence area 475 by expanding the overlapping area 470 in all directions to determine the 3D interference influence area 475.

The flight analysis module 485 may then compare the 3D interference influence area 475 against known flight paths (or waypoints) 480, which also include altitude data, to determine which flight paths (or waypoints) may intersect with the 3D influence area 475. If any flight paths (or waypoints) are found to intersect, they may be flagged as potentially impacted. The identified flight paths (or waypoints) may then be included in a list 490 for further analysis and potential mitigation.

In some aspects, the event analysis module 410, the clustering algorithm(s) 420, the location identification module 430, the RFI propagation module 455, the interference localization module 465, and the flight analysis module 485 may be components of the interference detection system as depicted in Figure 1. These components may be implemented as software modules within the system. These modules may be run on a single computer device or distributed across multiple computer devices that are either locally connected or remotely connected through the Internet.

The depicted flow 400 for detecting and locating GPS lateral position spoofing is provided for conceptual clarify. In some aspects, the flow may be applied to other types of RFI activities. As discussed above, these interference activities may produce common interference symptoms across a group of flights that are affected by the same interference source. These common interference symptoms may include, but are not limited to, position shifts, altitude shifts, time shifts, position accuracy estimates, and a loss of contact with GPS satellite sources. The example flow 400 may be applied to detect and locate the RFI sources and assess impacted flights paths or locations.

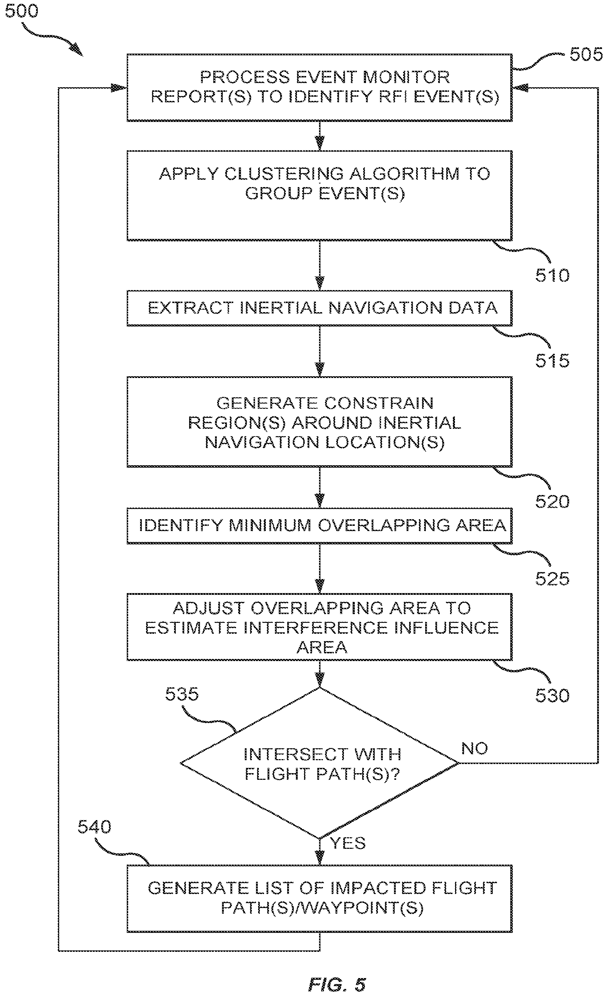

Figure 5 depicts an example method 500 for interference detection and impact analysis using custom GPS event monitor reports, according to some aspects of the present disclosure. In some aspects, the method 500 may be performed by one or more computing devices configured to conduct automated interference detection. These computing devices may include local servers and/or cloud-based platforms, depending on the operational requirements and the scale of data processing needed.

At block 505, a computer device (e.g., the interference detection system 155 of Figure 1) analyzes the event monitor reports (e.g., 135 of Figure 1, or 405 of Figure 4) received from various airplanes over an extended period of time. Each event monitor report represents a RF interference event, where the location determined by the GPS signal (e.g., 130 of Figure 1) differs significantly from the location determined by the airplane's inertial navigation system (INS) (e.g., 115 of Figure 1). Each event monitor report may include both the spoofed GPS location (e.g., 435 of Figure 4) and the corresponding inertial navigation location (e.g., 440 of Figure 4).

At block 510, the computer device applies a clustering algorithm (e.g., 420 of Figure 4) to the identified RF interference events (e.g., 415 of Figure 4). The algorithm groups the events into clusters (e.g., 425-1, 425-2, and 425-3 of Figure 4) based on the similarity of their spoofed GPS locations. Each cluster (e.g., 425-1 of Figure 4) represents a set of RF interference events that share the same or similar spoofed GPS location (e.g., 435 of Figure 4), which may indicate a consistent spoofing activity in that area. Examples of clustering algorithms may include k-means, DBSCAN, hierarchical clustering, or other suitable algorithms for unsupervised learning. In some aspects, the clustering process may be performed manually. Analysts may visually inspect the RF interference events on a map and manually select and group events with similar or nearby spoofed GPS location.

At block 515, for each cluster (e.g., 425-1 of Figure 4), the computer device extracts the inertial navigation data (e.g., 440 of Figure 4) associated with each RF interference event. The inertial navigation data represents the actual location of the airplane as determined by the INS (e.g., 115 of Figure 1) at the time of the spoofing event.

At block 520, the computer device generates constraint regions around each inertial navigation location (e.g., 440 of Figure 4). The constraint regions are determined based on the spoofing device characteristics (e.g., 445 of Figure 4) of a spoofing device (e.g., 125 of Figure 1). If the spoofing device is assumed to have a uniform influence in all directions, circles may be generated with a consistent radius. In some aspects, such as when the inertial navigation location is represented in 3D data (e.g., including longitude, latitude, and altitude coordinates), corresponding 3D geometric shapes such as spheres or ellipsoids may be generated. These shapes consider the vertical direction, providing a more accurate representation of the spoofing device's influence area in 3D space.

At block 525, the computer device determines the minimum overlapping area (e.g., 470 of Figure 4) where the circles or ellipses intersect. The overlapping area represents the region most likely to contain the spoofing device (e.g., 125 of Figure 1). The shape of this overlapping area may be irregular (e.g., 305 of Figure 3), depending on the distribution of the inertial navigation locations (e.g., 440 of Figure 4) and the estimated spoofing device characteristics (e.g., 445 of Figure 4).

At block 530, the computer device expands the minimum overlapping area (e.g., 470 of Figure 4) in all directions to provide a more accurate estimation of the spoofing influence. In some aspects, the computer device may expand the overlapping area by the estimated characteristics of the spoofing device (e.g., 445 of Figure 4). The resulting expanded area represents the spoofing influence area (e.g., 310 of Figure 3), which accounts for the potential reach of the spoofing device in all directions.

In aspects where 3D inertial navigation location (including longitude, latitude, and altitude) is provided, the computer device may generate 3D geometric shapes such as spheres or ellipsoids around the identified central points (e.g., 310 of Figure 3) or potential spoofing device locations. The 3D geometric shapes may represent the space that the spoofing device may influence, accounting for the vertical direction (e.g., the altitude).

At block 535, the computer device compares the identified interference influence area (e.g., 475 of Figure 4) with known flight paths (or waypoints) (e.g., 480 of Figure 4). The computer device checks whether any flight paths (or waypoints) intersect with the influence area. If no intersections are found, the method 500 returns to block 505 for continuous monitoring and analysis. If any flight paths (or waypoints) are found to intersect with the spoofing influence area, the method 500 moves to block 540.

At block 540, the computer device generates a list of impacted flight paths (or waypoints). The list highlights the flight routes or specific waypoints (e.g., airports) that may be affected by the spoofing device. After generating the list, the method 500 returns to block 505 for continuous monitoring and analysis and updating the list to reflect any new RF interference events.

The example method 500 for interference detection using event monitor reports, as depicted, may not be limited to detecting GPS spoofing devices. The method may also be applied to a wide range of other RFI effects any RF receiver system, such as communication, navigation, or surveillance systems. By processing event monitor reports and identifying RF interference events, the system may detect various types of interferences that disrupts GPS signals, estimate the influence areas, and evaluate the impact on flight paths. The method can also estimate the influence areas for any RFI effects common to different airplanes with estimated positions and times.

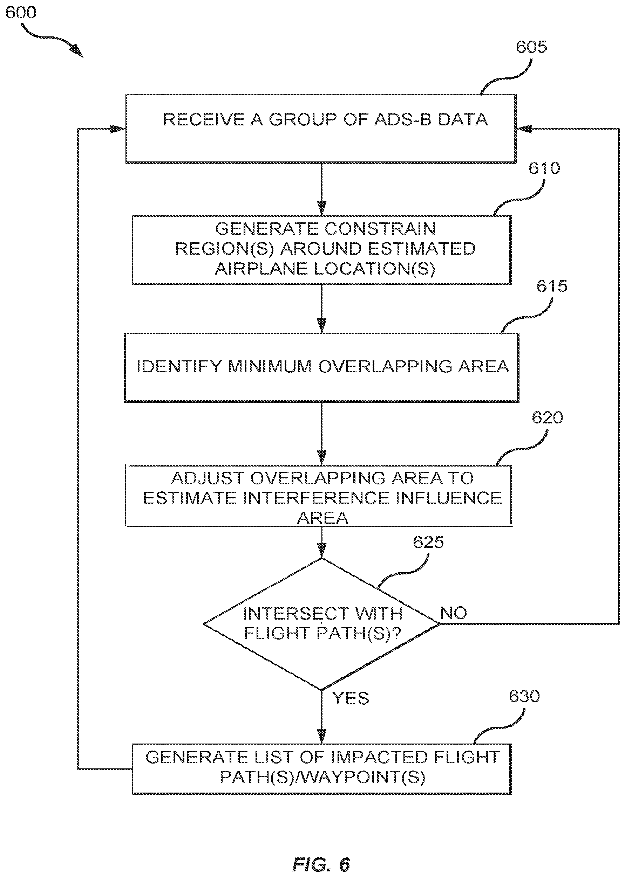

Figure 6 depicts an example method 600 for interference detection and impact analysis using coasted ADS-B data, according to some aspects of the present disclosure. In some aspects, the method 600 may be performed by one or more computing devices configured to conduct interference detection. These computing devices may include local servers and/or cloud-based platforms, depending on the operational requirements and the scale of data processing needed.

At block 605, a computer device (e.g., the interference detection system 155 of Figure 1) receives a group of non-coasted ADS-B data points, which are typically broadcasted by an airplane based on GPS signals under normal circumstances. Analysts, either manually or through an automated process, analyze the ADS-B trajectories of various flights and remove all data points determined to be spoofed. Once the spoofed points are removed, the remaining data is used to produce coasted ADS-B data, which estimates true airplane locations independent of the compromised GPS signals.

At block 610, the computer device generates source location constraint regions (e.g., 460 of Figure 4) around the estimated airplane locations derived from the coasted ADS-B data. The constraint regions may be determined based on the estimated interference characteristics of the spoofing device (e.g., 445 of Figure 4). In aspects where the coasted ADS-B data indicate 3D locations (including longitude, latitude, and altitude coordinates), 3D geometric shapes, such as spheres or ellipsoids, may be generated to integrate the vertical dimension of the spoofing device's influence.

At block 615, the computer device identifies the minimum overlapping area (e.g., 470 of Figure 4) where the constraint regions intersect. The overlapping area may represent the region most likely to contain the spoofing device, based on the convergence of multiple estimated airplane locations that are affected by the spoofing signals. For 3D data, this may involve identifying the 3D overlapping space where spheres or ellipsoids intersect.

At block 620, the computer device estimates the interference influence area (e.g., 475 of Figure 4) by expanding the overlapping area. The resulting influence area, whether a 2D or 3D shape, represents the geographical region that the spoofing device may affect.

At block 625, the computer device compares the identified interference influence area (e.g., 475 of Figure 4) against flight paths (or waypoints) (e.g., 480 of Figure 4) to determine whether any flight paths (or waypoints) intersect with this area. If no intersections are found, the method 600 returns to block 605, where the computer device continues to monitor and analyze new coasted ADS-B data for spoofing detection. If intersections are detected, the method 600 proceeds to block 630.

At block 630, the computer device generates a list, highlighting the flight paths (or waypoints) that may be affected by the spoofing device. The method 600 then returns to block 605, where the computer device continues to monitor and analyze new coasted ADS-B data and update the list to reflect new RF interference events.

The example method 600 for interference detection using coasted ADS-B data, as depicted, may not be limited to detecting spoofing devices. The method may also be applied to other RFI activities and locate corresponding impacted areas.

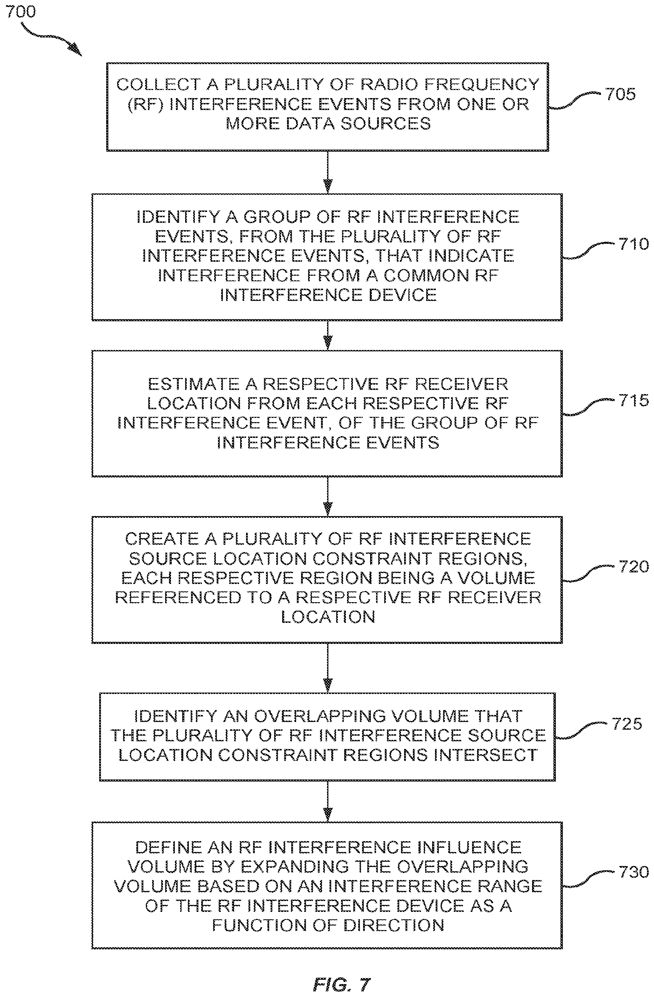

Figure 7 is a flow diagram depicting an example method 700 for RF interference detection, according to some aspects of the present disclosure.

At block 705, a computer device (e.g., interference detection system 155 of Figure 5) collects a plurality of RF interference events (e.g., 415 of Figure 4) from one or more data sources (e.g., 405 of Figure 4). In some aspects, the one or more data sources may comprise at least one of Automatic Dependent Surveillance-Broadcast (ADS-B) data or custom event monitor report data. In some aspects, the data sources may be any type of report with common RF interference effects for any RF receiver(s).

At block 710, the computer device identifies a group of RF interference events (e.g., 425-1 of Figure 4), from the plurality of RF interference events (e.g., 415 of Figure 4), that indicate interference from a common RF interference device (e.g., 125 of Figure 1).

At block 715, the computer device estimates a RF receiver location (e.g., 440 of Figure 4) from each respective RF interference event, of the group of RF interference events.

At block 720, the computer device creates a plurality of RF interference source location constraint regions (e.g., 460 of Figure 4), each respective region being centered around a respective RF receiver location.

At block 725, the computer device identifies an overlapping volume (e.g., 470 of Figure 4) that the plurality of RF interference source location constraint regions intersect.

At block 730, the computer device defines an RF interference influence volume (e.g., 475 of Figure 4) by expanding the overlapping area based on an interference range of the RF interference device (e.g., 445 of Figure 4) as a function of direction.

In some aspects, the computer device may further identify one or more RF receiver paths or locations (e.g., 480 of Figure 4) that intersect with the RF interference influence volume, and generate a list (e.g., 490 of Figure 4) comprising the one or more paths or locations, indicating that the one or more RF receiver paths or locations are potentially impacted by the RF interference device.

In some aspects, to identify the group of RF interference events, the computer device may apply a clustering algorithm (e.g., 420 of Figure 4) to the plurality of RF interference events, and group RF interference events with a common RF interference source into a cluster (e.g., 425-1, 425-2, or 425-3 of Figure 4).

In some aspects, each of the RF interference source location constraint regions may comprise a two-dimensional (2D) area formed by extending the interference range of the RF interference device in one or more directions.

In some aspects, each of the RF interference source location constraint regions may comprise a three-dimensional (3D) volume formed by extending the interference range of the RF interference device in one or more directions.

In some aspects, the RF receiver location may comprise two-dimensional (2D) data, comprising longitude and latitude.

In some aspects, the RF receiver location may comprise three-dimensional (3D) data, comprising longitude, latitude, and altitude.

In some aspects, the computer device may create a plurality of 3D RF interference source location constraint regions, each respective 3D region being centered around a respective RF receiver location, identify a 3D overlapping volume that the plurality of 3D RF interference source location constraint regions intersect, define a 3D interference influence volume by expanding the 3D overlapping volume based on the interference range of the RF interference device as a function of direction, identify one or more RF receiver paths or locations that intersect with the 3D interference influence volume, and generate a list comprising the one or more RF receiver paths or locations, indicating that the one or more RF receiver paths or locations are potentially impacted by the RF interference device.

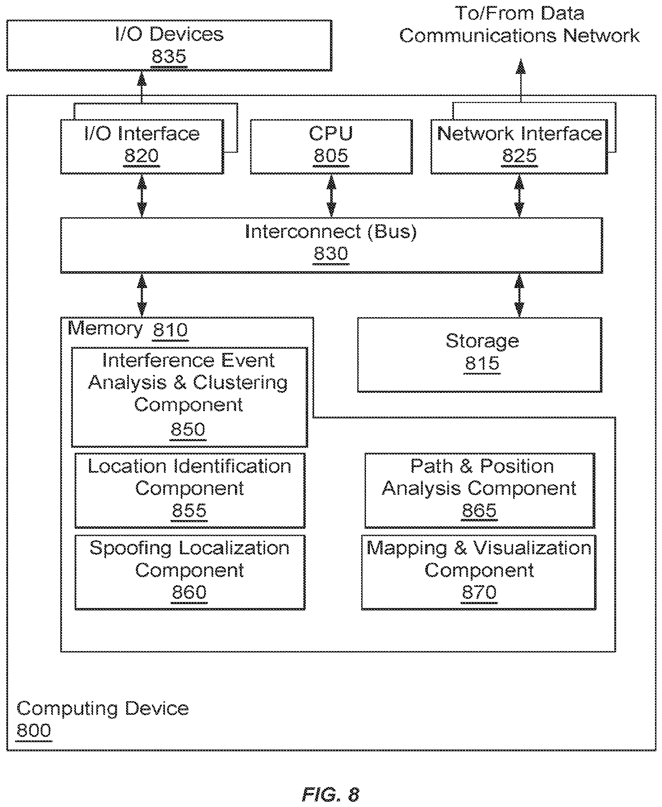

Figure 8 depicts an example computing device 800 configured to perform various aspects of the present disclosure, according to some aspects of the present disclosure. Although depicted as a physical device, in some aspects, the computing device 800 may be implemented using virtual device(s), and/or across a number of devices (e.g., in a cloud environment).

As illustrated, the computing device 800 includes a CPU 805, memory 810, storage 815, one or more network interfaces 825, and one or more I/O interfaces 820. In the illustrated aspect, the CPU 805 retrieves and executes programming instructions stored in memory 810, as well as stores and retrieves application data residing in storage 815. The CPU 805 is generally representative of a single CPU and/or GPU, multiple CPUs and/or GPUs, a single CPU and/or GPU having multiple processing cores, and the like. The memory 810 is generally considered to be representative of a random access memory. Storage 815 may be any combination of disk drives, flash-based storage devices, and the like, and may include fixed and/or removable storage devices, such as fixed disk drives, removable memory cards, caches, optical storage, network attached storage (NAS), or storage area networks (SAN).

In some aspects, I/O devices 835 (such as keyboards, monitors, etc.) are connected via the I/O interface(s) 820. Further, via the network interface 825, the computing device 800 can be communicatively coupled with one or more other devices and components (e.g., via a network, which may include the Internet, local network(s), and the like). As illustrated, the CPU 805, memory 810, storage 815, network interface(s) 825, and I/O interface(s) 820 are communicatively coupled by one or more buses 830.

In the illustrated aspect, the memory 810 includes an interference event analysis & clustering component 850, a location identification component 855, an interference localization component 860, a path & position analysis component 865, and a mapping & visualization component 870. Although depicted as discrete components for conceptual clarity, in some aspects, the operations of the depicted components (and others not illustrated) may be combined or distributed across any number of components. Further, although depicted as software residing in memory 810, in some aspects, the operations of the depicted components (and others not illustrated) may be implemented using hardware, software, or a combination of hardware and software.

In one aspect, the interference event analysis & clustering component 850 may analyze the event monitor reports (e.g. position shift reports, or coasted ADS-B data) to identify interference events. The component 850 may also include clustering algorithms that group these events based on similarities in interference effects. In one aspect, the location identification component 855 may process the inertial navigation data or coasted ADS-B data to determine the estimated airplane location during interference events. In one aspect, the interference localization component 860 may generate 2D or 3D source location constraint regions around the estimated airplane locations. The interference localization component 860 may then identify the minimum overlapping area where these constraint regions intersect. Following the identification, the interference localization component 860 may estimate the interference influence area by expanding the overlapping region based on the estimated interference range of the spoofing device. In one aspect, the path & position analysis component 865 may compare the identified spoofing influence area against RF receiver paths (or waypoints) to determine if any paths (or waypoints) intersect with the influence area. The path & position analysis component 865 may generate a list including all potentially impacted RF receiver paths (or waypoints). In one aspect, the mapping & visualization component 870 may integrate the determined interference influence area and RF receiver paths (or waypoints) on a geographic map. The mapping & visualization component 870 may provide a visualization of the potential impact of the RF interference device in 2D or 3D space.

In the illustrated example, the storage 815 may include a variety of data for effective operation and continuous improvement of the spoofing detection system. The data may include, but is not limited to, event monitor reports, coasted ADS-B data, clustering results, flight path data, identified spoofing influence areas, and lists of impacted flight paths. In some aspects, the aforementioned data may be saved in a remote database that connects to the computing device 800 via a network (e.g., the Internet).

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

The description includes the following clauses:

1. A method, comprising:

collecting a plurality of radio frequency (RF) interference events from one or more data sources;
identifying a group of RF interference events, from the plurality of RF interference events, that indicate interference from a common RF interference device;
estimating a respective RF receiver location from each respective RF interference event, of the group of RF interference events;
creating a plurality of RF interference source location constraint regions, each respective region being a volume referenced to a respective RF receiver location;
identifying an overlapping volume that the plurality of RF interference source location constraint regions intersect; and
defining an RF interference influence volume by expanding the overlapping volume based on an interference range of the RF interference device as a function of direction.

2. The method of clause 1, further comprising:

identifying one or more RF receiver paths or locations that intersect with the RF interference influence volume; and
generating a list comprising the one or more RF receiver paths or locations, indicating that the one or more RF receiver paths or locations are potentially impacted by the RF interference device.

3. The method of clause 1 or clause 2, wherein the one or more data sources comprises at least one of Automatic Dependent Surveillance-Broadcast (ADS-B) data or custom event monitor report data.

4. The method of any of clauses 1 to 3, wherein identifying the group of RF interference events comprises:

applying a clustering algorithm to the plurality of RF interference events; and
grouping RF interference events with a common interference source into a cluster.

5. The method of any of clauses 1 to 4, wherein each of the RF interference source location constraint regions comprises a two-dimensional (2D) area formed by extending the interference range of the RF interference device in one or more directions.

6. The method of any of clauses 1 to 5, wherein each of the RF interference source location constraint regions comprises a three-dimensional (3D) volume formed by extending the interference range of the RF interference device in one or more directions.

7. The method of any of clauses 1 to 6, wherein the RF receiver location comprises two-dimensional (2D) data, comprising longitude and latitude.

8. The method of any of clauses 1 to 7, wherein the RF receiver location comprises three-dimensional (3D) data, comprising longitude, latitude, and altitude.

9. The method of clause 8, further comprising:

creating a plurality of 3D RF interference source location constraint regions, each respective 3D region being centered around a respective RF receiver location;
identifying a 3D overlapping volume that the plurality of 3D RF interference source location constraint regions intersect;
defining a 3D interference influence volume by expanding the 3D overlapping volume based on the interference range of the RF interference device as a function of direction;
identifying one or more RF receiver paths or locations that intersect with the 3D interference influence volume; and
generating a list comprising the one or more RF receiver paths or locations, indicating that the one or more RF receiver paths or locations are potentially impacted by the RF interference device.

10. A system, comprising:

one or more memories collectively containing one or more programs;
one or more processors, wherein the one or more processors are configured to, individually or collectively, perform an operation comprising:

collecting a plurality of radio frequency (RF) interference events from one or more data sources;
identifying a group of RF interference events, from the plurality of RF interference events, that indicate interference from a common RF interference device;
estimating a respective RF receiver location from each respective RF interference event, of the group of RF interference events;
creating a plurality of RF interference source location constraint regions, each respective region being a volume referenced to a respective RF receiver location;
identifying an overlapping volume that the plurality of RF interference source location constraint regions intersect; and
defining an RF interference influence volume by expanding the overlapping volume based on an interference range of the RF interference device as a function of direction.

11. The system of clause 10, wherein the one or more processors are configured to, individually or collectively, perform the operation further comprising:

identifying one or more RF receiver paths or locations that intersect with the RF interference influence volume; and
generating a list comprising the one or more RF receiver paths or locations, indicating that the one or more RF receiver paths or locations are potentially impacted by the RF interference device.

12. The system of clause 10 or clause 11, wherein the one or more data sources comprises at least one of Automatic Dependent Surveillance-Broadcast (ADS-B) data or custom event monitor report data.

13. The system of any of clauses 10 to 12, wherein, to identify the group of RF interference events, the one or more processors are configured to, individually or collectively, perform the operation comprising:

applying a clustering algorithm to the plurality of RF interference events; and
grouping RF interference events with a common interference source into a cluster.

14. The system of any of clauses 10 to 13, wherein each of the RF interference source location constraint regions comprises a two-dimensional (2D) area formed by extending the interference range of the RF interference device in one or more directions.

15. The system of any of clauses 10 to 14, wherein each of the RF interference source location constraint regions comprises a three-dimensional (3D) volume formed by extending the interference range of the RF interference device in one or more directions.

16. The system of any of clauses 10 to 15, wherein the RF receiver location comprises two-dimensional (2D) data, comprising longitude and latitude.

17. The system of any of clauses 10 to 16, wherein the RF receiver location comprises three-dimensional (3D) data, comprising longitude, latitude, and altitude.

18. The system of clause 17, wherein the one or more processors are configured to, individually or collectively, perform the operation further comprising:

creating a plurality of 3D RF interference source location constraint regions, each respective 3D region being centered around a respective RF receiver location;
identifying a 3D overlapping volume that the plurality of 3D RF interference source location constraint regions intersect;
defining a 3D interference influence volume by expanding the 3D overlapping volume based on the interference range of the RF interference device as a function of direction;
identifying one or more RF receiver paths or locations that intersect with the 3D interference influence volume; and
generating a list comprising the one or more RF receiver paths or locations, indicating that the one or more RF receiver paths or locations are potentially impacted by the RF interference device.

18A. A system, comprising:

one or more memories collectively containing one or more programs;
one or more processors, wherein the one or more processors are configured to, individually or collectively, perform an operation according to the method of any of clauses 1 to 9.

19. One or more (optionally non-transitory) computer-readable media containing, in any combination, computer program code that, when executed by a computer system, performs an operation comprising:

collecting a plurality of radio frequency (RF) interference events from one or more data sources;
identifying a group of RF interference events, from the plurality of RF interference events, that indicate interference from a common RF interference device;
estimating a respective RF receiver location from each respective RF interference event, of the group of RF interference events;
creating a plurality of RF interference source location constraint regions, each respective region being a volume referenced to a respective RF receiver location;
identifying an overlapping volume that the plurality of RF interference source location constraint regions intersect; and
defining an RF interference influence volume by expanding the overlapping volume based on an interference range of the RF interference device as a function of direction.

20. The one or more (optionally non-transitory) computer-readable media of clause 19, wherein the computer program code that, when executed by the computer system, performs the operation further comprising:

identifying one or more RF receiver paths or locations that intersect with the RF interference influence volume; and

generating a list comprising the one or more RF receiver paths or locations, indicating that the one or more RF receiver paths or locations are potentially impacted by the RF interference device.

20A. One or more computer-readable media containing, in any combination, computer program code that, when executed by a computer system, performs an operation according to the method of any of clauses 1 to 9.

## Claims

1. A method, comprising:

collecting a plurality of radio frequency (RF) interference events (415) from one or more data sources (405);
identifying a group of RF interference events (425-1), from the plurality of RF interference events (415), that indicate interference from a common RF interference device;
estimating a respective RF receiver location (435) from each respective RF interference event, of the group of RF interference events;
creating a plurality of RF interference source location constraint regions (460), each respective region being a volume referenced to a respective RF receiver location;
identifying an overlapping volume (470) that the plurality of RF interference source location constraint regions intersect; and
defining an RF interference influence volume (475) by expanding the overlapping volume based on an interference range of the RF interference device as a function of direction.

2. The method of claim 1, further comprising:

identifying one or more RF receiver paths or locations that intersect with the RF interference influence volume (475); and
generating a list (490) comprising the one or more RF receiver paths or locations, indicating that the one or more RF receiver paths or locations are potentially impacted by the RF interference device.

3. The method of claim 1 or claim 2, wherein the one or more data sources comprises at least one of Automatic Dependent Surveillance-Broadcast (ADS-B) data (450) or custom event monitor report data (405).

4. The method of any of claims 1 to 3, wherein identifying the group of RF interference events (425-1) comprises:

applying a clustering algorithm to the plurality of RF interference events (415); and
grouping RF interference events with a common interference source into a cluster (425-1, 425-2, or 425-3).

5. The method of any of claims 1 to 4, wherein each of the RF interference source location constraint regions (460) comprises a two-dimensional (2D) area formed by extending the interference range of the RF interference device in one or more directions.

6. The method of any of claims 1 to 5, wherein each of the RF interference source location constraint regions (460) comprises a three-dimensional (3D) volume formed by extending the interference range of the RF interference device in one or more directions.

7. The method of any of claims 1 to 6, wherein the RF receiver location (435) comprises two-dimensional (2D) data, comprising longitude and latitude.

8. The method of any of claims 1 to 7, wherein the RF receiver location (435) comprises three-dimensional (3D) data, comprising longitude, latitude, and altitude.

9. The method of claim 8, further comprising:

creating a plurality of 3D RF interference source location constraint regions (460), each respective 3D region being centered around a respective RF receiver location;

identifying a 3D overlapping volume (470) that the plurality of 3D RF interference source location constraint regions intersect;

defining a 3D interference influence volume (475) by expanding the 3D overlapping volume based on the interference range of the RF interference device as a function of direction;

identifying one or more RF receiver paths or locations (490) that intersect with the 3D interference influence volume; and

generating a list (490) comprising the one or more RF receiver paths or locations, indicating that the one or more RF receiver paths or locations are potentially impacted by the RF interference device.

10. A system, comprising:

one or more memories collectively containing one or more programs;

one or more processors, wherein the one or more processors are configured to, individually or collectively, perform an operation comprising:

collecting a plurality of radio frequency (RF) interference events (415) from one or more data sources (405);

identifying a group of RF interference events (425-1), from the plurality of RF interference events (415), that indicate interference from a common RF interference device;

estimating a respective RF receiver location (435) from each respective RF interference event, of the group of RF interference events;

creating a plurality of RF interference source location constraint regions (460), each respective region being a volume referenced to a respective RF receiver location;

identifying an overlapping volume (470) that the plurality of RF interference source location constraint regions intersect; and

defining an RF interference influence volume (475) by expanding the overlapping volume based on an interference range of the RF interference device as a function of direction.

11. The system of claim 10, wherein the one or more processors are configured to, individually or collectively, perform the operation further comprising:

identifying one or more RF receiver paths or locations that intersect with the RF interference influence volume (475); and

generating a list (490) comprising the one or more RF receiver paths or locations, indicating that the one or more RF receiver paths or locations are potentially impacted by the RF interference device.

12. The system of claim 10 or claim 11, wherein the one or more data sources comprises at least one of Automatic Dependent Surveillance-Broadcast (ADS-B) data (450) or custom event monitor report data (405), and/or, wherein, to identify the group of RF interference events, the one or more processors are configured to, individually or collectively, perform the operation comprising:

applying a clustering algorithm to the plurality of RF interference events (415); and

grouping RF interference events with a common interference source into a cluster (425-1, 425-2, or 425-3).

13. The system of any of claims 10 to 12, wherein each of the RF interference source location constraint regions (460) comprises a two-dimensional (2D) area formed by extending the interference range of the RF interference device in one or more directions, and/or, wherein each of the RF interference source location constraint regions (460) comprises a three-dimensional (3D) volume formed by extending the interference range of the RF interference device in one or more directions, and/or, wherein the RF receiver location (435) comprises two-dimensional (2D) data, comprising longitude and latitude.

14. The system of any of claims 10 to 13, wherein the RF receiver location (435) comprises three-dimensional (3D) data, comprising longitude, latitude, and altitude, optionally,

wherein the one or more processors are configured to, individually or collectively, perform the operation further comprising:

creating a plurality of 3D RF interference source location constraint regions (460), each respective 3D region being centered around a respective RF receiver location;

identifying a 3D overlapping volume (470) that the plurality of 3D RF interference source location constraint regions intersect;

defining a 3D interference influence volume (475) by expanding the 3D overlapping volume based on the interference range of the RF interference device as a function of direction;

identifying one or more RF receiver paths or locations (490) that intersect with the 3D interference influence volume; and

generating a list (490) comprising the one or more RF receiver paths or locations, indicating that the one or more RF receiver paths or locations are potentially impacted by the RF interference device.

**15.** One or more computer-readable media containing, in any combination, computer program code that, when executed by a computer system, performs an operation according to the method of any of claims 1 to 9.

*FIG. 1*

FIG. 2A

FIG. 2B

FIG. 2C

FIG. 3

*FIG. 4*

*FIG. 5*

600

605

RECEIVE A GROUP OF ADS-B DATA

610

GENERATE CONSTRAIN
REGION(S) AROUND ESTIMATED
AIRPLANE LOCATION(S)

615

IDENTIFY MINIMUM OVERLAPPING AREA

620

ADJUST OVERLAPPING AREA TO
ESTIMATE INTERFERENCE INFLUENCE
AREA

625

INTERSECT WITH
FLIGHT PATH(S)?

NO

YES

630

GENERATE LIST OF IMPACTED FLIGHT
PATH(S)/WAYPOINT(S)

*FIG. 6*

700

COLLECT A PLURALITY OF RADIO FREQUENCY (RF) INTERFERENCE EVENTS FROM ONE OR MORE DATA SOURCES — 705

IDENTIFY A GROUP OF RF INTERFERENCE EVENTS, FROM THE PLURALITY OF RF INTERFERENCE EVENTS, THAT INDICATE INTERFERENCE FROM A COMMON RF INTERFERENCE DEVICE — 710

ESTIMATE A RESPECTIVE RF RECEIVER LOCATION FROM EACH RESPECTIVE RF INTERFERENCE EVENT, OF THE GROUP OF RF INTERFERENCE EVENTS — 715

CREATE A PLURALITY OF RF INTERFERENCE SOURCE LOCATION CONSTRAINT REGIONS, EACH RESPECTIVE REGION BEING A VOLUME REFERENCED TO A RESPECTIVE RF RECEIVER LOCATION — 720

IDENTIFY AN OVERLAPPING VOLUME THAT THE PLURALITY OF RF INTERFERENCE SOURCE LOCATION CONSTRAINT REGIONS INTERSECT — 725

DEFINE AN RF INTERFERENCE INFLUENCE VOLUME BY EXPANDING THE OVERLAPPING VOLUME BASED ON AN INTERFERENCE RANGE OF THE RF INTERFERENCE DEVICE AS A FUNCTION OF DIRECTION — 730

*FIG. 7*

To/From Data
Communications Network

I/O Devices
**835**

I/O Interface
**820**

CPU
**805**

Network Interface
**825**

Interconnect (Bus)
**830**

Memory **810**

Interference Event
Analysis & Clustering
Component
**850**

Location Identification
Component
**855**

Spoofing Localization
Component
**860**

Storage
**815**

Path & Position
Analysis Component
**865**

Mapping & Visualization
Component
**870**

Computing Device
**800**

*FIG. 8*

Europäisches
Patentamt
European
Patent Office
Office européen
des brevets

# EUROPEAN SEARCH REPORT

**Application Number**

EP 25 20 1385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 740 882 B (UNIV CIVIL AVIATION CHINA) 28 July 2023 (2023-07-28) <br> * paragraph [0005] - paragraph [0009] * <br> * paragraph [0028] - paragraph [0031] * <br> * paragraph [0046] - paragraph [0047]; claim 1 * <br> ----- | 1-15 | INV. <br> H04B17/20 <br> H04B17/345 <br> H04B17/391 |
| A | CN 103 188 704 B (CHINA MOBILE GROUP SHANGHAI CO) 16 December 2015 (2015-12-16) <br> * paragraph [0016] - paragraph [0023] * <br> * paragraph [0033] - paragraph [0045] * <br> * paragraph [0052] - paragraph [0062] * <br> ----- | 1-15 | |
| A | CN 110 988 922 A (CHINA INSTITUTE OF RADIO WAVE PROPAGATION CHINA ELECTRONICS TECH GROUP) 10 April 2020 (2020-04-10) <br> * paragraph [0007] - paragraph [0014] * <br> * paragraph [0034]; claim 1 * <br> ----- | 1-15 | |
| A | CN 118 566 950 A (NAT UNIV DEFENSE TECHNOLOGY PLA) 30 August 2024 (2024-08-30) <br> * paragraph [0004] - paragraph [0005] * <br> * paragraph [0011] - paragraph [0013] * <br> * paragraph [0020] - paragraph [0022] * <br> * paragraph [0025] - paragraph [0028] * <br> ----- | 1-15 | |

**TECHNICAL FIELDS SEARCHED (IPC)**

H04B
G01S
H04W

The present search report has been drawn up for all claims

| Place of search | Date of completion of the search | Examiner |
|---|---|---|
| The Hague | 20 February 2026 | López Márquez, T |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 20 1385

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | | Publication date | Patent family member(s) | Publication date |
|---|---|---|---|---|
| CN 113740882 | B | 28-07-2023 | NONE | |
| CN 103188704 | B | 16-12-2015 | NONE | |
| CN 110988922 | A | 10-04-2020 | NONE | |
| CN 118566950 | A | 30-08-2024 | NONE | |

EPO FORM P0459

For more details about this annex : see Official Journal of the European Patent Office, No. 12/82